# DEMANDE DE BREVET EUROPEEN

(11) **EP 2 498 122 A2**
(43) Date de publication de la demande: **12.09.2012**
(21) Numéro de dépôt: 12004291.6
(22) Date de dépôt: 03.07.2007
(51) Int. Cl.: G02C 13/00

(54) **Prodede et dispositif de mesure du galbe d'une monture de lunettes**

(30) Priorité: 06.07.2006 FR 0606164
(62) Demande divisionnaire de: 07823536.3
(71) Demandeur: ACEP France, 75008 Paris (FR)
(72) Inventeur: Sayag, Jean-Philippe, 75016 Paris (FR)
(74) Mandataire: Oudin, Stéphane

(57) **Abrégé**

L'invention a pour objet un procédé de mesure du galbe d'une monture de lunettes (4) comprenant les opérations consistant à :
- déterminer la position d'un premier repère (18) définissant le plan moyen de la monture de lunettes (4),
- déterminer la position d'un deuxième repère (20) définissant l'orientation d'un support de verre de lunettes par rapport audit plan moyen, et
- mesurer l'angle entre lesdits premier et deuxième repères.

Elle a également pour objet un dispositif pour la mise en oeuvre du procédé.

## Description

La présente invention concerne un procédé et un dispositif de mesure du galbe d'une monture de lunettes.

Jusqu'à récemment, les verres de lunettes étaient usinés sans prendre en compte le galbe de la monture de lunettes. Il en résultait une distorsion de la vision dans la partie périphérique du verre, c'est-à-dire à l'extrême droite pour le verre droit et à l'extrême gauche pour le verre gauche.

Les techniques de fabrication des verres de lunettes se sont affinées et permettent maintenant de tenir compte du galbe de la monture. Ceci permet d'offrir au porteur de lunettes une vision plus précise dans les zones périphériques.

Cependant, la mesure du galbe d'une monture selon l'état de la technique est encore imparfaite.

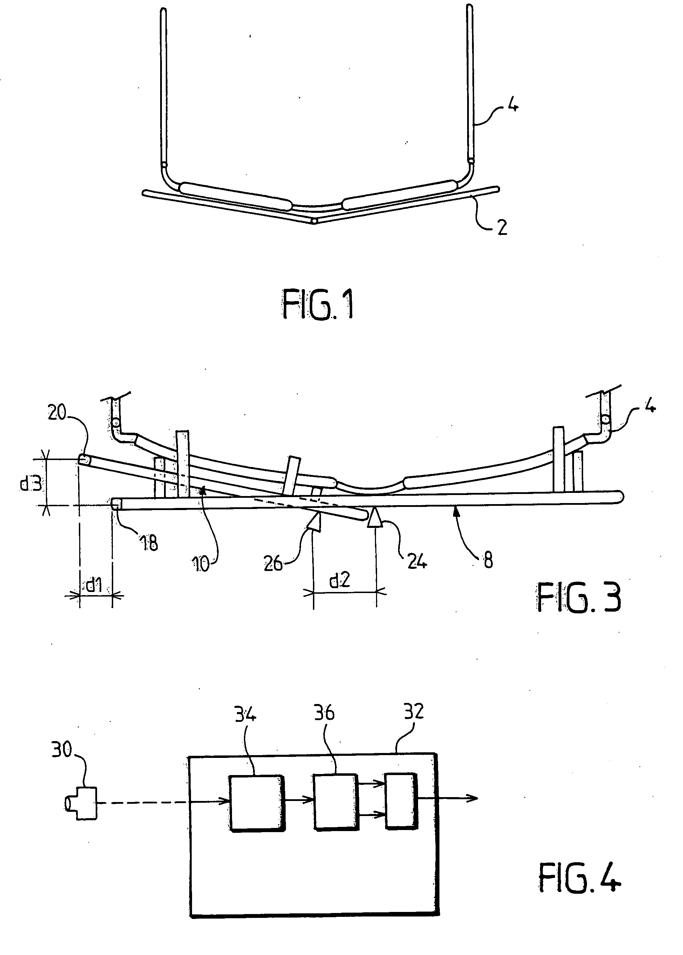

On a représenté schématiquement sur la figure 1 un tel moyen de mesure connu. Il se présente sous la forme d'un compas 2 que l'opticien applique contre la monture de lunettes 4 pour en déterminer le galbe. On conçoit qu'une telle mesure présente des inconvénients. Il est tout d'abord nécessaire de former l'opticien à une telle mesure. De plus, s'agissant d'une mesure faisant intervenir une personne, celle-ci n'est pas fiable (c'est-à-dire non reproductible). Enfin, cette mesure requiert un temps non négligeable.

L'invention a pour but de remédier aux inconvénients de l'art antérieur.

A cette fin, l'invention a pour objet un procédé de mesure du galbe d'une monture de lunettes comprenant les opérations consistant à :
- déterminer la position d'un premier repère définissant le plan moyen de la monture de lunettes,
- déterminer la position d'un deuxième repère définissant l'orientation d'un support de verre de lunettes par rapport audit plan moyen, et
- mesurer l'angle entre lesdits premier et deuxième repères, cet angle définissant le galbe de la monture de lunettes.

L'invention a également pour objet un dispositif de mesure du galbe d'une monture de lunettes, ledit dispositif comprenant un premier élément positionneur muni d'un premier repère, ajustable sur une monture de lunettes pour définir un plan moyen de ladite monture de lunettes, et un deuxième élément positionneur muni d'un deuxième repère, ajustable sur la monture de lunettes pour définir une orientation d'un support de verre de lunettes.

De manière avantageuse, au moins l'un des premier ou deuxième éléments positionneurs peuvent être formés directement par une partie de la monture de lunettes elle-même.

Alternativement, les premier et deuxième éléments positionneurs sont ajustés sur la monture de lunettes et sont pivotants l'un par rapport à l'autre.

Le dispositif selon l'invention comprend en outre des moyens de détermination de l'angle formé par lesdits premier et deuxième repères lorsque les premier et deuxième éléments positionneurs sont ajustés sur une monture de lunettes.

Ces moyens de détermination comprennent de préférence des moyens de saisie d'image, telle qu'une caméra, et des moyens numériques d'analyse d'image.

On décrira ci-après, à titre d'exemple non limitatif, une forme d'exécution de la présente invention, en référence au dessin annexé sur lequel :
- la figure 1, déjà décrite, est une vue de dessus qui illustre la mesure du galbe d'une monture de lunettes selon l'art antérieur,
- les figures 2a et 2b représentent respectivement en vue de face et en vue de dessus une monture de lunettes sur laquelle est monté un dispositif de mesure du galbe selon un premier mode de réalisation de l'invention,
- la figure 3 illustre de manière non limitative quelques paramètres qui peuvent être utilisés pour déterminer la galbe d'une monture de lunettes, et
- la figure 4 illustre schématiquement un dispositif de mesure conforme à l'invention.

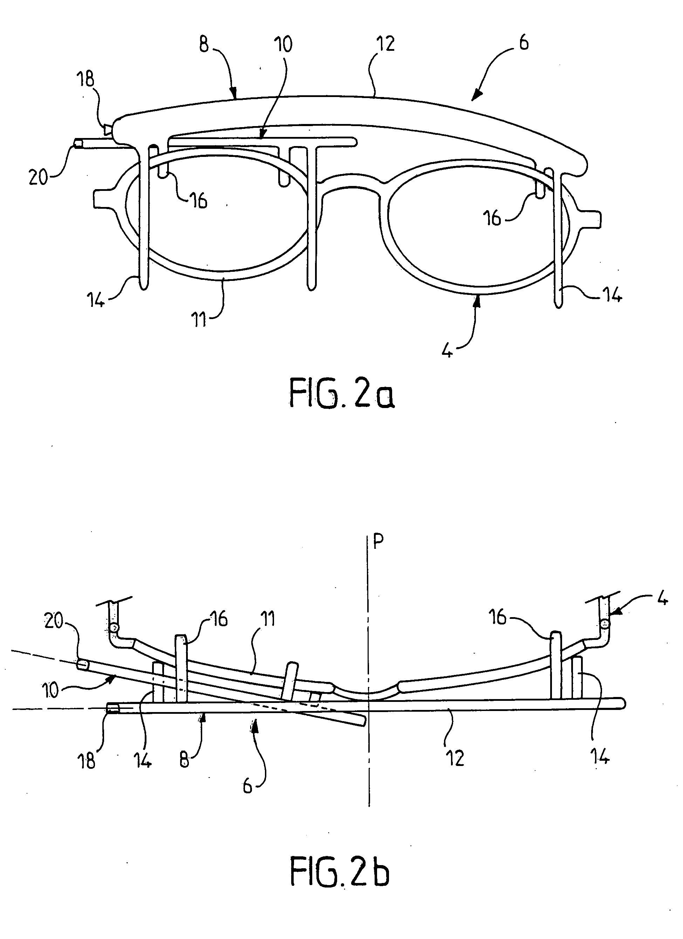

Sur la monture de lunettes 4 représenté sur les figures 2a et 2b, on a ajusté un dispositif 6 selon l'invention. Ce dispositif comporte un premier élément positionneur 8 et un deuxième élément positionneur 10. Le premier élément positionneur 8 se présente sous la forme d'un pont 12 sensiblement horizontal dont les extrémités sont chacune pourvues d'une première branche 14 contre laquelle la face antérieure de la monture de lunettes vient en appui et une deuxième branche 16 qui s'appuie sur la face postérieure de la monture de lunettes.

Le premier élément positionneur 8 est muni d'au moins un repère 18 dont la position est utilisée lors de la mesure du galbe, cette position permettant de définir le plan moyen de la monture. Par plan moyen, on entend un plan vertical perpendiculaire au plan de symétrie P de la monture de lunettes. Dans le mode de réalisation représenté, le repère 18 est disposé à une extrémité du pont 12. Il pourrait aussi être placé en un autre endroit, et par exemple au centre du pont 12 tel que le repère 24 sur la figure 3).

Le dispositif 6 comprend un deuxième élément positionneur 10. Celui-ci est destiné à permettre de déterminer l'orientation du support de verre 11 par rapport au plan moyen de la monture.

Ce deuxième élément positionneur 10 est ajusté sur l'un des deux supports de verre de la monture. Il comporte un repère 20 dont la position est fonction de la courbure de la monture de lunettes. Dans le mode de réalisation représenté, ce repère 20 est placé à une extrémité du deuxième élément positionneur 10. Il est dans l'exemple représenté monté pivotant sur le premier élément positionneur 8 par l'intermédiaire d'un pivot 22 prévu sur l'une des premières branches 14 du premier élément positionneur 8.

Connaissant les positions relatives des deux repères, on peut déterminer aisément le galbe de la monture. La figure 3 montre quelques exemples de paramètres à partir desquels on peut déterminer le galbe.

Les moyens de détermination sont de préférence automatisés et comprennent comme représenté à titre d'exemple sur la figure 4 l'utilisation d'un moyen de saisie d'image 30, par exemple une caméra, et un moyen numérique d'analyse d'image 32. Ce moyen 32 comprend un module de stockage 34 pour recevoir une image saisie et un module de traitement 36 pour calculer, à partir de la position des repères dans l'image saisie, le galbe de la monture de lunettes.

On notera que la mesure du galbe est faite sans que le patient ai besoin de porter la monture. Ainsi, le praticien peut positionner la monture de lunettes de manière précise et reproductible par rapport au moyen de saisie d'image. La distance et l'orientation des éléments positionneurs par rapport au moyen de saisie d'image est ainsi parfaitement connue. Par conséquent, la position relative des premier et deuxième repères permet au module de traitement d'image de déterminer le galbe de la monture.

On pourra ainsi par exemple placer la monture de lunettes avec sa face avant du côté du moyen de saisie d'image. Sur l'image frontale saisie, la distance apparente d1 entre les repères 18 et 20 est directement liée au galbe de la monture de lunettes. Avec la monture de lunettes dans la même position, on pourrait aussi mesurer le galbe en mesurant la distance apparente d2 entre un premier repère 24 placé au centre du premier élément positionneur 8, et sur sa face avant, et un deuxième repère 26 placé lui aussi sur la face avant du deuxième élément positionneur 10.

La mesure du galbe de la monture de lunettes pourrait également être effectuée en la plaçant de sorte qu'une branche de la monture soit face au moyen de saisie d'image. La mesure de la distance apparente d3 entre les repères 18 et 20 détermine le galbe de la monture de lunettes.

Il convient de noter que les repères peuvent être de forme, de texture, de couleur très diverses. Il importe seulement de les choisir de manière qu'il puisse être facilement détecté par le moyen de traitement d'image.

En particulier, il peut être avantageux de prévoir des repères de forme conique (repères 24 et 26) dont la base est destinée à être tournée vers le moyen de saisie d'image. L'ovalisation de la base sphérique du repère 26 telle que vue par le moyen de saisie d'image permet d'affiner la mesure du galbe.

Dans les modes de réalisation représentés, les repères sont sur des éléments positionneurs qui sont ajustables de manière amovible sur la monture de lunettes.

De tels éléments positionneurs peuvent être utilisés avec pratiquement n'importe quelle monture de lunettes.

On pourrait aussi prévoir que les repères soient fixés sur la paire de lunettes ou en fasse partie intégrante, par exemple sous forme d'éléments géométriques (cercle, triangle,...) à but premier décoratif.

## Revendications

1. Procédé de mesure du galbe d'une monture de lunettes (4) comportant deux supports de verre (11), comprenant les opérations consistant à :
- placer sur ladite monture de lunettes (4) un premier élément positionneur (8) muni d'un premier repère (18,24) dont la position définit le plan moyen de la monture,
- placer sur au moins l'un des deux supports de verre un deuxième élément positionneur (10) muni d'un deuxième repère (20,26) dont la position est fonction de la courbure de la monture de lunette (4)
- déterminer la position du premier repère (18,24) définissant le plan moyen de la monture de lunettes (4),
- déterminer la position du deuxième repère (20,26) définissant l'orientation d'un support de verre de lunettes par rapport audit plan moyen, et
- mesurer l'angle entre lesdits premier et deuxième repères, cet angle définissant le galbe de la monture de lunettes (4).

2. Procédé de mesure du galbe d'une monture de lunettes (4) selon la revendication 1 **caractérisé en ce que** la détermination de la position des premier et deuxième repères (18,24 ; 20,26) est réalisée à partir d'une saisie d'image frontale de la monture.

3. Procédé de mesure du galbe d'une monture de lunettes (4) selon la revendication 1 **caractérisé en ce que** la détermination de la position des premier et deuxième repères (18,24 ; 20,26) est réalisée à partir d'une saisie d'image latérale de la monture.

4. Dispositif de mesure du galbe d'une monture de lunettes (4), ledit dispositif comprenant un premier élément positionneur (8) muni d'au moins un premier repère (18,24) définissant un plan moyen de ladite monture de lunettes, et un deuxième élément positionneur (10) muni d'au moins un deuxième repère (20,26) pour définir une orientation d'un support de verre de lunettes **caractérisé en ce que** les premier et deuxième éléments positionneurs (8,10) sont ajustables de manière amovible sur ladite monture de lunettes.

5. Dispositif selon la revendication précédente **caractérisé en ce que** les premier et deuxième repères (24,26) sont de forme conique.

6. Dispositif selon l'une quelconque des revendications 4 à 5 **caractérisé en ce que** les premier et deuxième éléments positionneurs (8,10) sont montés pivotants entre eux.

7. Dispositif selon l'une quelconque des revendications 4 à 6 **caractérisé en ce qu'**il comprend en outre des moyens de détermination de l'angle formé par lesdits premier et deuxième repères lorsque les premier et deuxième éléments positionneurs (8,10) sont ajustés sur une monture de lunettes (4).

8. Dispositif selon la revendication précédente **caractérisé en ce que** lesdits moyens de détermination comprennent des moyens de saisie d'image et des moyens numérique d'analyse d'image.
